# EUROPEAN PATENT APPLICATION

(11) **EP 4 379 371 A1**
(43) Date of publication of application: **05.06.2024**
(21) Application number: 22210682.5
(22) Date of filing: 30.11.2022
(51) Int. Cl.: G01N 30/60, G01N 30/88, G01N 30/46

(54) **GAS CHROMATOGRAPH, COLUMN AND MANUFACTURING METHOD**

(71) Applicant: Koninklijke Philips N.V., 5656 AG Eindhoven (NL)
(72) Inventor: KLOOTWIJK, Johan Hendrik, 5656AG Eindhoven (NL); DIRKSEN, Peter, 5656AG Eindhoven (NL); HAARTSEN, Jaap Roger, 5656AG Eindhoven (NL)
(74) Representative: Philips Intellectual Property & Standards

(57) **Abstract**

The invention relates to a column 140 for a gas chromatograph. The invention suggests that the column 140 is a 3D-column comprising a carrier part 142 with a plurality of channels 143, a number of first and second connecting passages 1461, 1462 each coupling two adjacent first openings 1431 or second openings 1432 and a first and a second cover 1441, 1442 coupled to the carrier part 142, such that a 3-dimensional continuous flow path is provided. In the alternative, the column has a carrier part with a continuous planar flow path defined by an open channel formed into the carrier part, a cover part attached to the latter with a plurality of filling holes arranged along the open channel and a sealing member sealingly closing the filling holes. The invention also relates to a manufacturing method.

## Description

### FIELD OF THE INVENTION

The invention relates to a gas chromatograph for detecting volatile organic compounds in an analyte. Further, the invention relates to a column for a gas chromatograph and to a method for manufacturing such a column.

### BACKGROUND OF THE INVENTION

Gas chromatographic systems usually have a column and a detector for identification of different components in an analyte. Analytes passing along a length of the column coated with a layer employed as stationary phase are separated into their components owing to differences in their interactions with the stationary phase. The detector measures the amount of separated components exiting the column as a function of time. In general, columns are defined by a continuous flow path having a column length and a column diameter. In order to equip the column with the stationary phase, a solvent comprising active components, e.g. PDMS dissolved in hexane or pentane, is filled into the column and distributed due to capillary effects. Afterwards, the solvent has to be outgassed to enable the formation of the stationary phase by the active components. US 8,123,841 discloses a micro-column having a serpentine shape with a limited ratio of a channel spacing to a column diameter, thereby facilitating the coating of the column with the stationary phase. In order to increase the resolution of the gas chromatograph, the column length has to be increased and preferably also the diameter has to be decreased to facilitate better separation. However, large column lengths in combination with a relatively small diameter lead to difficulties in outgassing the solvent when equipping the column with the stationary phase material. Thus, an increase of the column length without a significant increase of the thermal mass is always limited by the filling properties, in particular the outgassing of the solvent from the column.

### SUMMARY OF THE INVENTION

It is an object of the present invention to propose a concept for a column of a gas chromatograph allowing an increase of column length while providing good filling properties, in particular allowing an even distribution of the stationary phase along the column length.

In a first aspect of the invention, a column for a gas chromatograph for detecting volatile organic compounds in an analyte is presented. In particular, a column for a gas chromatograph according to the first aspect of the invention is presented.

In a first alternative of the first aspect, the column is equipped with a/the stationary phase and configured to receive the analyte and separate the volatile organic compounds in the analyte. The column is a 3D-column comprising a carrier part with a plurality of channels each extending from a first opening to an opposite second opening, a first cover coupled to the carrier part and a second cover coupled to the carrier part, wherein the first cover has a number of first connecting passages each coupling two adjacent first opening and the second cover has a number of second connecting passages each coupling two adjacent openings, such that a 3-dimensional continuous flow path is provided by the plurality of channels coupled by the first and second connecting passages. A 3D-column according to the invention defines a column having a flow path with a planar extension and in addition an extension perpendicular to the planar extension. Thus, the column is defined by three parts, the carrier part, the first cover and the second cover. In the carrier part, the plurality of channels is provided, wherein the total length of the column is defined by the sum of the plurality of channels and the plurality of first and second connecting passages. Consequently, the carrier part with the channels extending from the first opening to the second opening can be easily equipped with a stationary phase providing excellent filling properties due to the short flow distances. Moreover, the column length can be increased without significantly increasing the thermal mass due to the 3-dimensional flow path defined by the plurality of channels that are interconnected to each other by means of the first and second connecting passages. When compared to a planar column, the column length is increased, while the thermal mass is still comparatively low. Contrary to the present invention, in the prior art only serpentine-shaped column designs are known to increase the length of the column while trying to keep the thermal mass low. It shall be understood that avoiding an increase of the thermal mass is important in order to ensure a uniform heating, shorter heating times and less power consumption. A mobile phase carries an analyte in a transport direction through said column. In a 3D-column the transport direction defines not a linear direction but the way of the analyte through said column having planar components and components in a direction perpendicular to the planar direction.

In a second alternative of the first aspect, the column has a carrier part with a continuous planar flow path defined by an open channel formed, in particular etched into the carrier part, a cover part attached to the carrier part which has a plurality of filling holes arranged along the open channel and a sealing member sealingly closing the filling holes. Thus, the column is a planar column that may also be referred as a 2D-column having a flow path with only planar extension. The distance the solvent needs to overcome is shortened due to the distributed filling holes. Thus, by having filling holes distributed along the open channel, outgassing of the solvent is simplified even in case of long column lengths of more than 5 m and small diameters in a range of 100 µm to 500 µm or even less. A mobile phase carries an analyte in a transport direction through said column. In a serpentine-shaped 2D-column the transport direction defines not a linear direction but the way of the analyte through said column along the serpentine shaped flow path having only planar components.

Preferentially, the gas chromatograph is a micro gas chromatograph. Micro gas chromatography is performed on a micro gas chromatograph to increase portability, decrease power consumption, and increase the speed of analysis. In that regard, the term "micro gas chromatograph" refers herein to any field portable versions of a gas chromatograph comprising one or more microfabricated components. In particular, in a micro gas chromatographs the column length may be typically in a range of 1 m to 5 m with a column diameter typically in a range of 100 µm to 500 µm. Thus, there are particular benefits by having a column according to the invention in a micro gas chromatograph. A micro gas chromatograph shall be understood as a gas chromatograph having at least one micro-scaled component.

Preferably, the first connecting passages are at least partly defined in the first cover and the second connecting passages are at least partly defined in the second cover. In other words, the first cover comprises at least partly the first connecting passages and the second cover comprises at least partly the second connecting passages. By having the connecting passages defined in the respective first or second cover, the flow passages and thus the total column length can be modified by changing the respective cover.

Preferentially, the channels are aligned parallel to each other, wherein each channel has a similar length extending in an axial direction. By having channels that are parallel aligned, a more compact column design is provided thereby reducing the thermal mass. The even length of the channels allows a simplified coupling of the first cover and the second cover. It shall be understood that a first channel defining an inlet of the flow path and a last channel defining an outlet of the flow path may have a length different from the length of the other channels in the axial direction. Preferably, a first free opening of the first openings or the second openings defines an inflow end of the 3-dimensional continuous flow path and a second free opening of the first openings or the second openings defines an outflow end of the 3-dimensional continuous flow path. Thus, also the inflow end and the outflow end are integrated in the compact arrangement of the channels in the carrier part. It shall be understood, that the inflow end and the outflow end may have various orientations.

It is further preferred that the first cover forms a base and the plurality of channels extend perpendicular to the first cover. Thus, a still compact arrangement is provided while allowing a more flexible design of the carrier part taking into account different connection types and space restrictions.

Preferably, the column has at least one heater associated to at least one of the first cover and the second cover. A heater may be necessary to enhance the interactions of the analyte comprising the volatile organic compounds and the stationary phase.

According to a preferred embodiment, the first cover has a first cover surface and the column has a first heater being in thermal connection with the first cover surface, wherein the first heater extends along the first cover surface. It is further preferred that the second cover has a second cover surface and the column has a second heater being in thermal connection with the second cover surface and extending along said second cover surface. It shall be understood that the first heater preferably extends completely over the first cover surface, thereby providing an even heat distribution along the first cover surface. Moreover, also the second heater preferably extends completely over the second cover surface, thereby providing an even heat distribution over the whole second cover surface. Thus, the interaction of the analyte and the stationary phase is further increased due to the even heat distribution.

Preferably, the channels are evenly distributed in the carrier part and each channel is spaced apart from at least a first adjacent channel with the first distance in a first direction perpendicular to the axial direction and from at least a second adjacent channel with a second distance in the second direction perpendicular to the axial direction and to the first direction. In that regard, the even distribution of the channels results in an even wall thickness allowing the uniform heat distribution. Thus, by having the channels being evenly distributed, a more uniform heat distribution within the carrier part is enabled.

Preferably, each channel has a cross section defined by a first length extending in the first direction and by a second length extending in the second direction, wherein the first distance is defined by the first length and the second distance is defined by sin (60°) of the second length. Thus, a hexagonal packing arrangement is provided enabling the highest-density lattice packing of channels having a circle-shaped cross-section. Thereby, the length of the column can be increased while maintaining the thermal mass when compared to a lower packing density.

Preferably, the first cover and the second cover are bonded to the carrier part by one, more or all of the following bonding means: an adhesive, a seal ring, an optical contact bonding, e.g. Ansprengen, contact bonding and a PDMS thin-film. Thus, a fluid-tide and temperature resistant bonding means is provided.

According to another preferred embodiment, the channels are defined by a inner wall extending in the transport direction and a surface enlarging structure extending from the inner wall in a direction different from the transport direction. Thus, the flow resistance in the channels is increased resulting in turbulences and an increased interaction between the stationary phase and the analyte. Further, the surface enlarging structure provide an increased surface equipped with the stationary phase also promoting an increased interaction between the stationary phase and the analyte.

It is further preferred, that the surface enlarging structure has one or both of a plurality of projections extending from the inner wall, or a plurality of cavities extending into the inner wall. Projections on the one hand and cavities on the other hand provide a suitable means for providing the enlarged surface area of the column resulting in an increased interaction between the analyte and the stationary phase.

Preferentially, the plurality of projections or cavities are evenly spaced in the transport direction. Thus, the interaction between the stationary phase and the analyte is increased due to the evenly spacing of projections or cavities.

It is further preferred that the plurality of projections or cavities extend perpendicular to the transport direction from the inner wall. Thus, manufacturing of the cavities or projections is simplified due to the orthogonal extension relative to the transport direction, since the inner wall defining the flow path extends in the transport direction. Thus, the projections or cavities extend orthogonal relative to the inner wall.

Preferentially, the plurality of projections or cavities comprises a first plurality of projections or cavities arranged in a first row along the inner wall and a second plurality of projections or cavities arranged in a second row along the inner wall. Preferably, the first row is arranged opposite to the second row. By having the plurality of projections or cavities arranged in a row, the manufacturing process is simplified.

It is further preferred that the first plurality of projections or cavities are arranged offset from the second plurality of projections or cavities in the transport direction. Thus, the density of the plurality of projections or cavities can be increased without the first plurality of projections disturbing the second plurality of projections thereby blocking the flow path. Increasing the density of the plurality of projections in that regard shall be understood as reducing the distance between two adjacent projections or cavities.

According to another preferred embodiment of the invention, the sealing member comprises one, more or all of the following:
- a non-outgassing sealing agent at least partly received in the filling holes;
- a wafer being a silicon wafer sealingly attached to the cover part;
- a wafer being a glass plate or a glass wafer sealingly attached to the cover part; or
- a foil sealingly attached to the cover part. Thus, a suitable means is provided to close the filling wholes after application of the stationary phase that includes outgassing of a solvent via the filling holes.

In a second aspect of the invention, a gas chromatograph for detecting volatile organic compounds in an analyte is presented.

The gas chromatograph has an injector for injecting the analyte, a motive inlet for receiving a flow of carrier gas serving as a mobile phase for carrying the analyte in a transport direction, a column equipped with a stationary phase and being configured to receive the analyte and separate the volatile organic compounds in the analyte, and a gas detector configured to detect the volatile organic compounds separated by the column. The column is formed in accordance with the first alternative or the second alternative of the first aspect of the invention.

According to the first alternative the column is thus defined by three parts, the carrier part, the first cover and the second cover. In the carrier part, the plurality of channels is provided, wherein the total length of the column is defined by the sum of the plurality of channels and the plurality of first and second connecting passages. Consequently, the carrier part with the channels extending from the first opening to the second opening can be easily equipped with a stationary phase providing excellent filling properties due to the short flow distances and enabling the outgassing. Outgassing is the release of a gas dissolved or absorbed in a solvent, including sublimation and evaporation. Moreover, the column length can be increased without significantly increasing the thermal mass due to the 3-dimensional flow path defined by the plurality of channels that are interconnected to each other by means of the first and second connecting passages. When compared to a planar column, the column length is increased, while the thermal mass is still comparatively low. Contrary to the present invention, in the prior art only serpentine-shaped column designs are known to increase the length of the column while trying to keep the thermal mass low.

According to the second alternative the column has a carrier part with a continuous planar flow path defined by an open channel formed, in particular etched into the carrier part, a cover part attached to the carrier part which has a plurality of filling holes arranged along the open channel and a sealing member sealingly closing the filling holes.

In a third aspect of the invention, a method for manufacturing a column for a gas chromatograph is presented. The method comprises the steps:
- providing a carrier part, a first cover and a second cover,
- forming at least a part of a continuous flow path in the carrier part, wherein the continuous flow path in the carrier part is sectional defined by a plurality of channels in the carrier part,
- applying a stationary phase to at least a part of the flow path,
- coupling a first cover to the carrier part, wherein each channel has a first opening and the first cover has a number of corresponding first connecting passages each coupling two adjacent first openings, and
- coupling a second cover to the carrier part, wherein each channel has a second opening opposite the first opening and the second cover has a number of corresponding second connecting passages each coupling two adjacent second openings, such that a 3-dimensional continuous flow path is provided by the plurality of channels coupled by the first and second connecting passages. By providing such a carrier part and forming a plurality of channels within the carrier part and coupling a first and second cover to said carrier part, the method has the same benefits and preferred embodiments as described with regard to the second aspect of the invention.

Preferably, the stationary phase is applied to the flow path sectional defined by the plurality of channels before the first cover and/or the second cover are coupled to the carrier part. Thus, for coating the column with a stationary phase, the flow distance is significantly reduced and thus optimized filling properties are provided. Consequently, the stationary phase can be applied more evenly and faster to the flow path defined by the channels.

The column, in particular at least a part of a continuous flow path, is preferably formed by a subtractive manufacturing process. Subtractive manufacturing processes in the present application refer to controlled machining and material removal processes that start with solid blocks, bars, rods of plastic, metal, or other materials that are shaped by removing material through cutting, boring, drilling, in particular laser drilling, grinding and chemical material removal, in particular etching.

Preferably, forming at least a part of a continuous flow path in the carrier part comprises the steps:
- depositing or thermally growing an oxide layer onto the carrier part, wherein the carrier part is formed by an un-patterned silicon wafer,
- spin coating of a photoresist layer onto the carrier part,
- exposing the coated carrier to a pattern of intense light defining a lateral dimensions of the plurality of channels by photolithography to structure the oxide layer thereby forming a hard mask partly covering the carrier part,
- etching of the carrier part, in particular Reactive Ion etching, wherein a region of the carrier part not covered with the hard mask is removed to create the plurality of channels.

The deposition of the oxide layer is preferably executed by physical vapor deposition (PVD), chemical vapor deposition (CVD), Atomic Layer Deposition (ALD) or plasma-enhanced chemical vapor deposition (PECVD). Physical vapor deposition (PVD), sometimes called physical vapor transport (PVT), describes a variety of vacuum deposition methods which can be used to produce thin films and coatings on substrates including metals, ceramics, glass, and polymers. PVD is characterized by a process in which the material transitions from a condensed phase to a vapor phase and then back to a thin film condensed phase. Chemical vapor deposition (CVD) is a vacuum deposition method used to produce high quality, and high-performance, solid materials. Plasma-enhanced chemical vapor deposition (PECVD) is a chemical vapor deposition process used to deposit thin films from a gas state (vapor) to a solid state on a substrate. Chemical reactions are involved in the process, which occur after creation of a plasma of the reacting gases. The channel structure is formed by photolithography including at least the spin coating, the exposing and the etching step. Photolithography is a general term used for techniques that use light to produce minutely patterned thin films of suitable materials over a substrate, such as a silicon wafer, to protect selected areas of it. The exposure to light causes a chemical change that allows some of the photoresist to be removed by a special solution, called "developer" by analogy with photographic developer. Positive photoresist, the most common type, becomes soluble in the developer when exposed; with negative photoresist, unexposed regions are soluble in the developer. In etching, a liquid ("wet") or plasma ("dry") chemical agent removes the uppermost layer of the substrate in the areas that are not protected by photoresist. A suitable method is the so called reactive-ion etching (RIE).

It is preferred, that the depth of the channels is determined by the etching time. Preferentially, the oxide layer has a thickness of typically 1 µm. It is further preferred, that the resist layer has a thickness of typically 0,5 µm.

Preferably, forming at least a part of a continuous flow path in the carrier part includes forming a surface enlarging structure extending from the inner wall in a direction different from the transport direction. Thus, the flow resistance in the channels is increased resulting in turbulences and an increased interaction between the stationary phase and the analyte. Further, the surface enlarging structure provide an increased surface equipped with the stationary phase also promoting an increased interaction between the stationary phase and the analyte.

In a fourth aspect of the invention, an alternative method for manufacturing a column for a gas chromatograph is presented. The method comprises the steps:
- providing a non-patterned carrier part;
- etching an open channel into the carrier part;
- attaching a cover part to the carrier part which has a plurality of filling holes arranged along the open channel;
- filling a solvent comprising an active component into the open channel via the filling holes,
- outgassing the solvent via the filling holes enabling formation of a stationary phase by the active component,
- sealingly closing the filling holes with a sealing member, thereby forming a continuous planar flow path.

Etching of the open channel preferably includes the steps described with regard to the formation of the channels. In particular, RIE-etching is a suitable etching process.

It shall be understood that the gas chromatograph of claim 1, the column of claim 12, the method of claim 13 and 16, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
FIG. 1 shows a schematic view of a gas chromatographic system according to a first embodiment,
FIG. 2a shows a schematic side view of a column for separating volatile organic compounds in an analyte according to a first embodiment,
FIG. 2b shows a schematic top view of the column according to FIG. 2a,
FIG. 3 shows a schematic view of a channel design and arrangement for a column according to FIGs. 2a and 2b,
FIG. 4 shows a schematic view of a channel having a surface enlarging structure for a column according to FIGs. 2a and 2b,
FIG. 5 shows an exploded view of a column according to a second embodiment,
FIG. 6a shows a top view a top wafer with a plurality of top covers for the column shown in FIG. 5,
FIG. 6b shows a detailed view of the top wafer shown in FIG. 6a,
FIG. 7a shows a top view a central wafer with a plurality of carrier parts for the column shown in FIG. 5,
FIG. 7b shows a detailed view of the central wafer shown in FIG. 7a,
FIG. 8a shows a top view a bottom wafer with a plurality of top covers for the column shown in FIG. 5,
FIG. 8b shows a detailed view of the bottom wafer shown in FIG. 8a,
FIG. 9a shows a schematic top view of a column according to a third embodiment,
FIG. 9b shows a side view of the column according to the third embodiment during the manufacturing process,
FIG. 9c shows a side view of the column according to the second embodiment during the manufacturing process with a sealing member according to a first embodiment,
FIG. 9d shows a side view of the column according to the second embodiment during the manufacturing process with a sealing member according to a second embodiment,
FIG. 10 shows a flow chart illustrating method for manufacturing a column according to FIGs. 1 to 8b,
FIG. 11 shows a flow chart illustrating part-steps of the method according to FIG. 10, and
FIG. 12 shows a flow chart illustrating method for manufacturing a column according to FIGs. 9a to 9d.

### DETAILED DESCRIPTION OF THE EMBODIMENTS

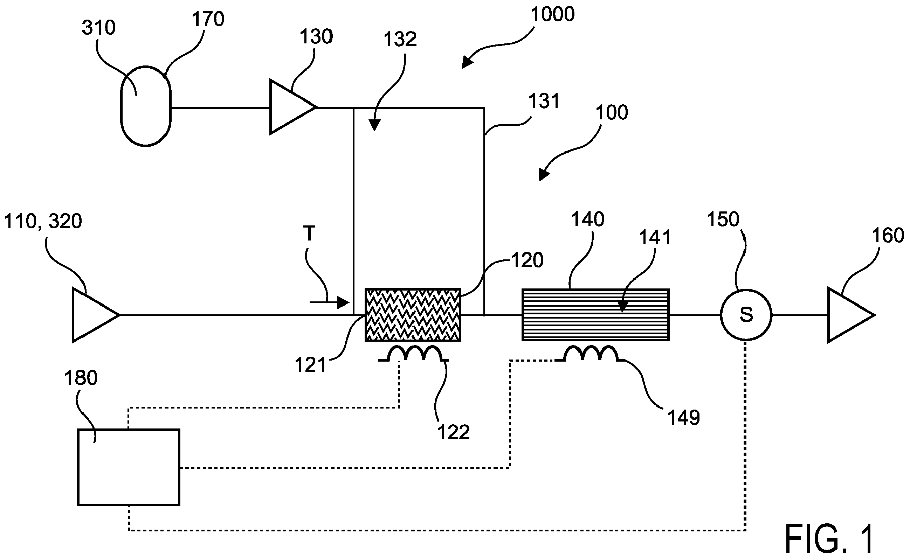

FIG. 1 shows a gas chromatographic system 1000 for detecting volatile organic compounds. The gas chromatographic system 1000 comprises a fluid container 170 for providing a carrier gas 310 and a gas chromatograph 100 coupled to the fluid container 170 for receiving the carrier gas 310. The gas chromatographic system 1000 further comprises a control unit 180. The fluid container 170 is preferably a high-pressure fluid container.

The gas chromatograph 100 has an inlet 110 for injecting an analyte 320 comprising the volatile organic compounds and a pre-concentrator 120 to receive, concentrate and desorb the analyte 320. The pre-concentrator 120 has an inlet port 121 coupled to said inlet 110.

The analyte 320 is transported from the inlet 110 to the pre-concentrator 120 in a transport direction T. The pre-concentrator 120 preferably comprises a pre-concentrator heater 122 that is controlled by the control unit 180.

In the shown embodiment, the inlet 110 is an injector configured to inject accelerated analyte into the pre-concentrator 120. A motive inlet 130 is coupled to the fluid container 170 for receiving an accelerated flow of a mobile phase 310 provided by the pressurized hydrogen 310 and injecting the mobile phase 310 into the flow path of the analyte 320 either after leaving the pre-concentrator 120 via a first conduit 131 or before entering the pre-concentrator 120 via a second conduit 132.

The gas chromatograph 100 further has a column 140 equipped with a stationary phase 141. The column 140 is configured to receive the pre-concentrated analyte 320 carried by the mobile phase 310. The column 140 further has a column heater 149 that is controlled by the control unit 180. The analytes 320 traversing the column 140 are separated in the column 140 owing to differences in the interactions with the stationary phase 141. The gas chromatograph 100 further has a detector 150 arranged downstream of the column 140 that is configured to detect or identify the volatile organic compounds separated by the column 140 over time based on the rate at which the volatile organic compounds pass through the column 140. The detector 150 is in signal communication with the control unit 180 and configured to provide data relating to the detected volatile organic compounds, in particular related to passing times. The flow of carrier gas 310 and analyte 320 is finally exhausted via an exhaust port 160.

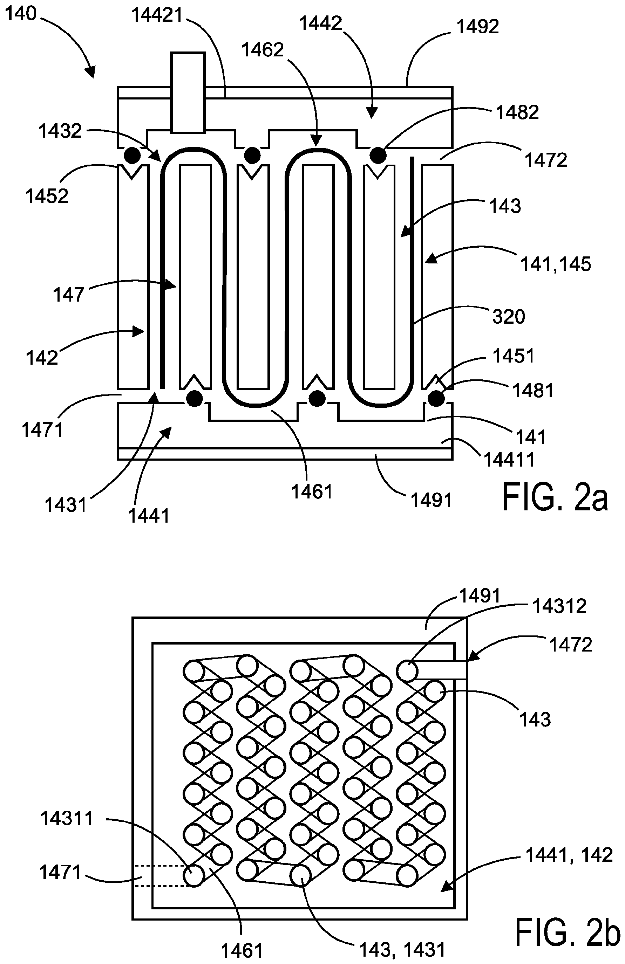

FIGs. 2a and 2b schematically show the column 140 in more detail, wherein FIG. 2a shows a side view of the column and FIG. 2b shows a top view of the column schematically.

As described with regard to FIG. 1, the column 140 is equipped with a stationary phase 141. The column 140 is configured as a 3D-column and has a carrier part 142 with a plurality of channels 143. Each channel 143 extends from a first opening 1431 to an opposite second opening 1432. The column 140 further has a first cover 1441 coupled to the carrier part 143 and a second cover 1442 coupled to the carrier part 143. The first cover 1431 has a number of first connecting passages 1461 and the second cover 1442 has a number of second connecting passages 1462. Each of the first connecting passages 1461 is configured to connect two adjacent first openings 1431 in a fluid conducting manner. Each one of the second fluid passages 1462 is configured to couple two adjacent second openings 1432 in a fluid conducting manner. Thus, a 3-dimensional continuous flow path is provided that is defined by an inner wall 145 provided by the channels 143 and the corresponding connecting passages 1461, 1462, wherein the inner wall 145 is equipped with the stationary phase 141.

The channels 143 are preferably aligned parallel to each other. As in particular shown in FIG. 2b, the second connecting passages 1462 connect the channels 143 in a zigzag pattern in a top view. A first free opening 14311 chosen either from the first openings 1431 or from the second openings 1432 defines an inflow end 1471 of the continuous flow path 147. A second free opening 14312 chosen either from the first openings 1431 or from the second openings 1432 defines an outflow end 1472 of the continuous flow path 147.

The first cover 1441 has a first cover surface 1441a and the column 140 has a first heater 1491 associated to the first cover surface 1441a. The first heater 1491 is in thermal connection with the first cover surface 1441a and extends along the first cover surface 1441a. Preferably, the second cover 1442 has a second cover surface 1441a and the column 140 has a second heater 1492 associated to the second cover 1442. The second heater 1492 is in thermal connection with the second cover surface 1442a and extends along the second cover surface 1442a.

As shown in FIG. 2a, the channels 143 are arranged in parallel alignment. Further, as shown in FIG. 2b, the channels 143 are evenly distributed in the carrier part 142 in a serpentine-like arrangement. However, also other arrangements of the channels including the connecting passages are possible.

The first cover 1441 is bonded to the carrier part 142 by first bonding means 1481 being, for example, an adhesive, a seal ring, an optical contact bonding or a PDMS thin-film. Accordingly, the second cover 1442 is bonded to the carrier part 142 by second bonding means 1482 being, for example, an adhesive, a seal ring, an optical contact bonding or a PDMS thin-film. The inner wall 145 equipped with the stationary phase 141 and defining the continuous flow path 147 preferably has a number of first receiving spaces 1451 arranged adjacent the first openings 1431 that are configured to receive the bonding means at least partly, thereby enabling a fluid tight bond with the first cover 1441.

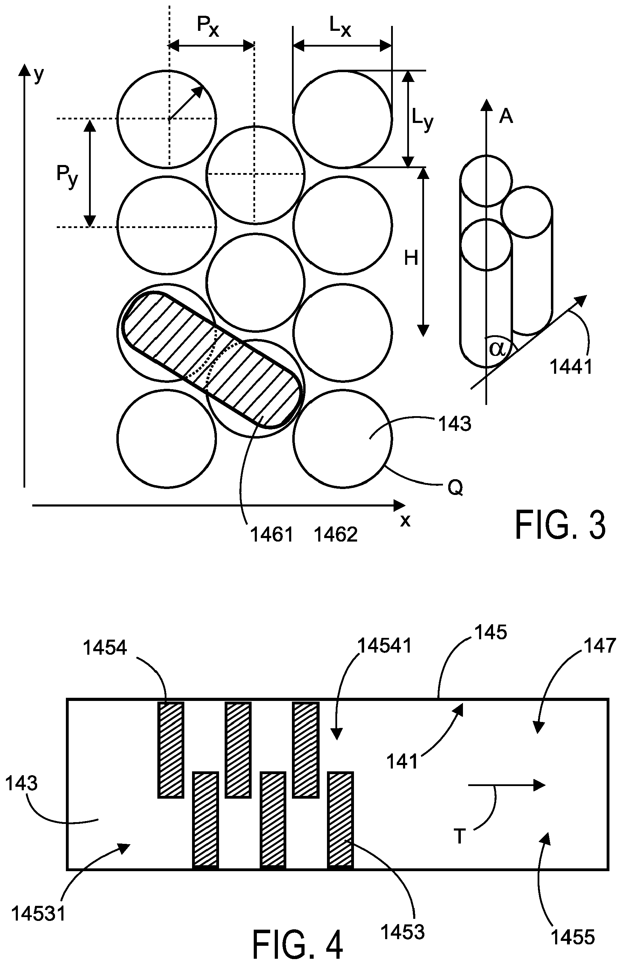

FIG. 3 shows the design and arrangement of the channels 143 in more detail. The evenly distributed channels 143 are spaced apart from each other in a first direction x with a first distance Pₓ. The first direction x extends perpendicular to an axial direction A along which the channels 143 extend. Further, each channel 143 is spaced apart with a second distance P_{y} from at least a second adjacent channel in a second direction y perpendicular to the axial direction A and to the first direction x.

In the shown embodiment, each channel 143 has a circular cross section Q. However, also other configurations of the cross section Q are possible and may be beneficial in terms of drag reduction or enlarging the surface. The cross section Q is defined by a first length Lₓ extending in the first direction x and by a second length L_{y} extending in the second direction y. The first distance Pₓ is defined by the first length Lₓ and the second distance P_{y} is defined by sin(60°) of the second length L_{y}. Thus, a dense pack of the channels 143 is provided resulting in an increased column length of the continuous flow path 147. The channels 143 extend parallel to each other in the axial direction A. The channels 143 extend in an angle α relative to the extension of the first cover 144 defining a base cover. Preferably, all columns 143 have the same length H in the axial direction A and thus extend to the second cover 1442 being a top plate in the same angle as relative to the first cover 1441. The angle α is preferably 90° ensure a space saving arrangement. In FIG. 3, the channels 143 have a circular cross-section. However, other cross-sections are beneficial to provide a surface enlarging structure, e.g. defined by a polygonal cross-section.

FIG. 4 shows a sectional view of the flow path 147 defined by the section of the channel 143. The inner wall 145 of the channel 143 preferably has a number of first surface enlarging structures 1453 arranged in a first row 14531 and a number of second surface enlarging structures 1454 arranged opposite to the first surface enlarging structures 1454 in a second row 14541. By having the first and second surface enlarging structures 1453, 1454, the surface area equipped with a stationary phase 141 is increased and thus the interaction of the analyte 320 (cf. FIG. 1) is increased without increasing the thermal mass of the column 140 significantly. In the embodiment shown in FIG. 4, the first and second surface enlarging structures 1453, 1454 are formed as projections projecting from the inner wall 145 into the flow path 147 perpendicular to the transport direction T. The first surface enlarging structures 1453 are arranged offset from the second surface enlarging structures 1454. The inner wall 145 preferably has a drag reduction structure 1455.

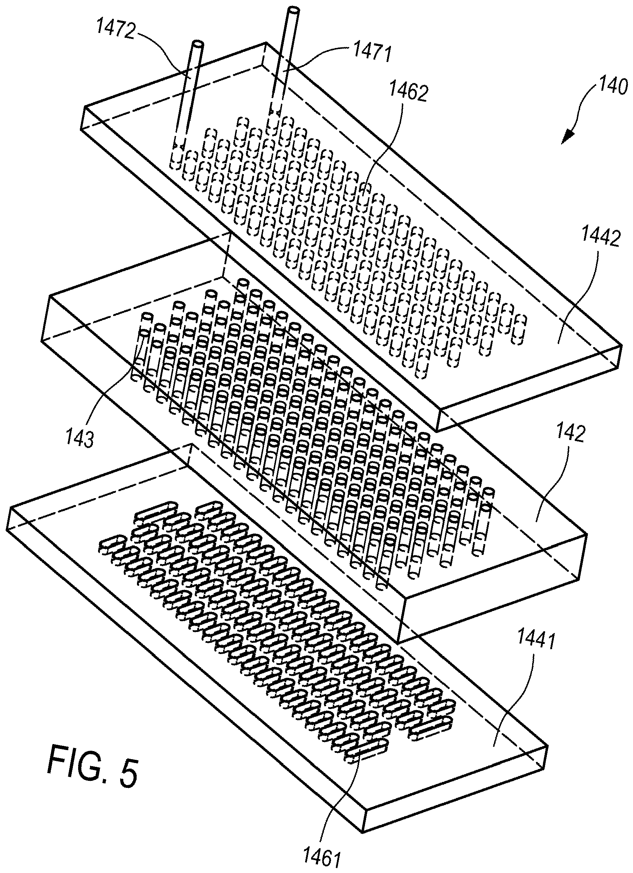

FIG. 5 shows a second embodiment of the column 140 that differs from the first embodiment only by the dimensions of the flow path 147 formed by a plurality of channels 143 interconnected to each other by a number of first connecting passages 1461 provided in a first cover 1441 being a bottom cover and a number of second connection passages 1462 provided in a second cover 1442 being a top cover. An inflow end 1471 of the continuous flow path 147 is partly provided by a first free opening and extends through the top cover 1442. An outflow end 1472 of the continuous flow path 147 is partly provided by a second free opening and also extends through the top cover 1442. In order to avoid repetitions, reference is made to the detailed description of FIGs. 2a and 2b.

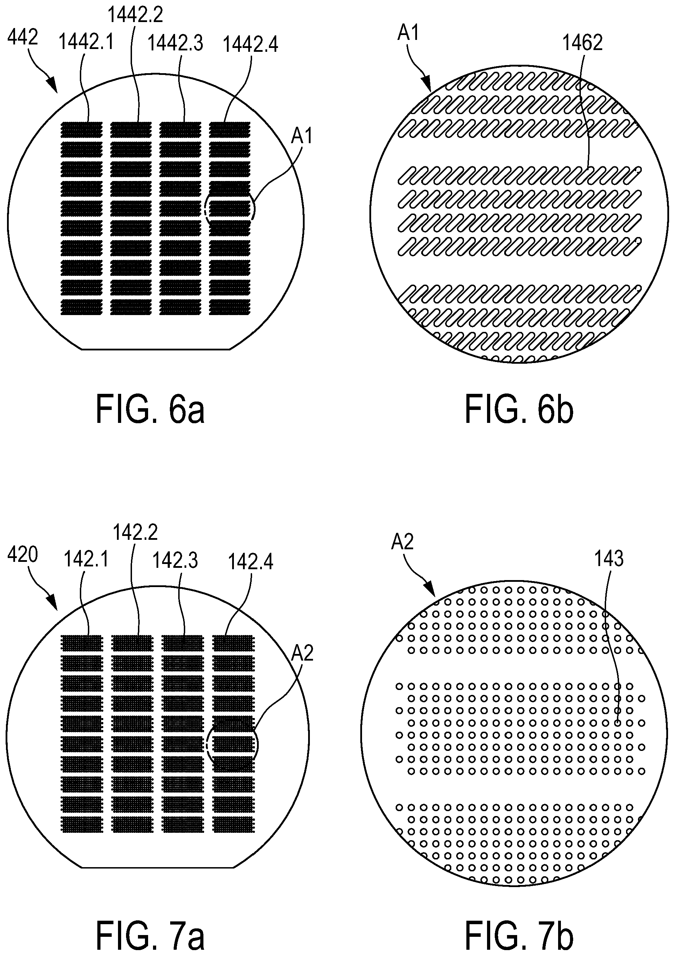

FIG. 6a shows a top wafer 442 comprising a plurality of second covers 1442.1, 1442.2, 1442.3, 1442.4, wherein only four of the plurality of second covers are indicated by reference sign. FIG. 6b shows section A1 indicated in FIG. 6a in more detail. The plurality of second connection passages 1462 is shown, wherein only a single second connection passage 1462 is indicated by reference sign. Each second connection passage 1462 is configured to connect two adjacent channels 143 (cf. FIG. 7b).

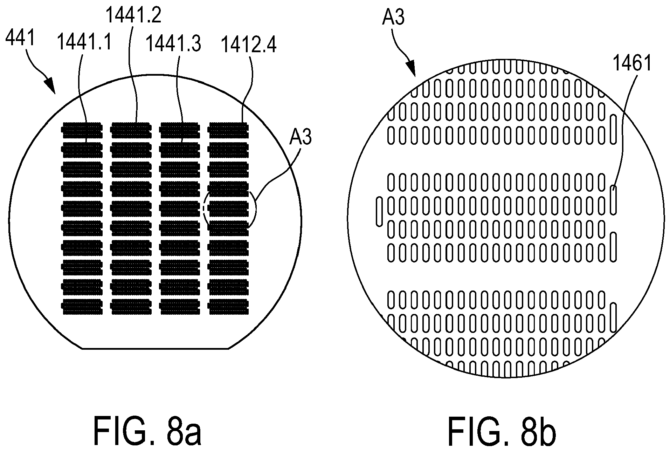

FIG. 7a shows a central wafer 420 comprising a plurality of carrier parts 142.1, 142.2, 142.3, 142.4, wherein only four of the plurality of carrier parts 142.1, 142.2, 142.3, 142.4 are indicated by reference sign. FIG. 7b shows section A2 indicated in FIG. 7a in more detail. The plurality of channels 143 is shown, wherein only a single channel 143 is indicated by reference sign. Each channel 143is connected with at least one adjacent channel by the second connection passage 1462 and the first connecting passages 1461 (cf. Fig. 6b, 8b).

FIG. 8a shows a bottom wafer 441 comprising a plurality of first covers 1441.1, 1441.2, 1441.3, 1441.4, wherein only four of the plurality of first covers are indicated by reference sign. FIG. 8b shows section A3 indicated in FIG. 8a in more detail. The plurality of first connection passages 1462 is shown, wherein only a single first connection passage 1461 is indicated by reference sign. Each first connection passage 1461 is configured to connect two adjacent channels 143 (cf. FIG. 7b).

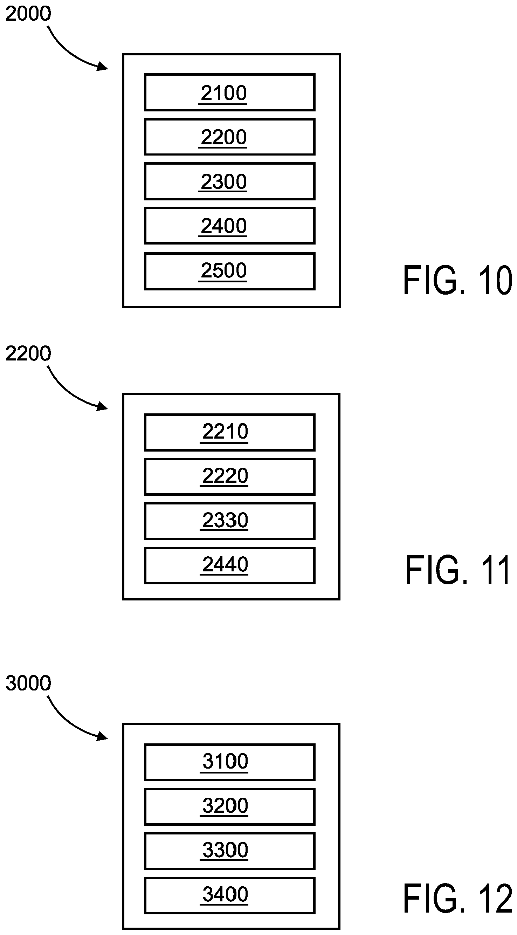

The top wafer 442, the central wafer 420 and the bottom wafer 441 may each be manufactured by the steps shown in FIG. 11 and afterwards the single center parts 142, first covers 1421 and second covers 1422 may be separated from the respective wafers 240, 441, 442.

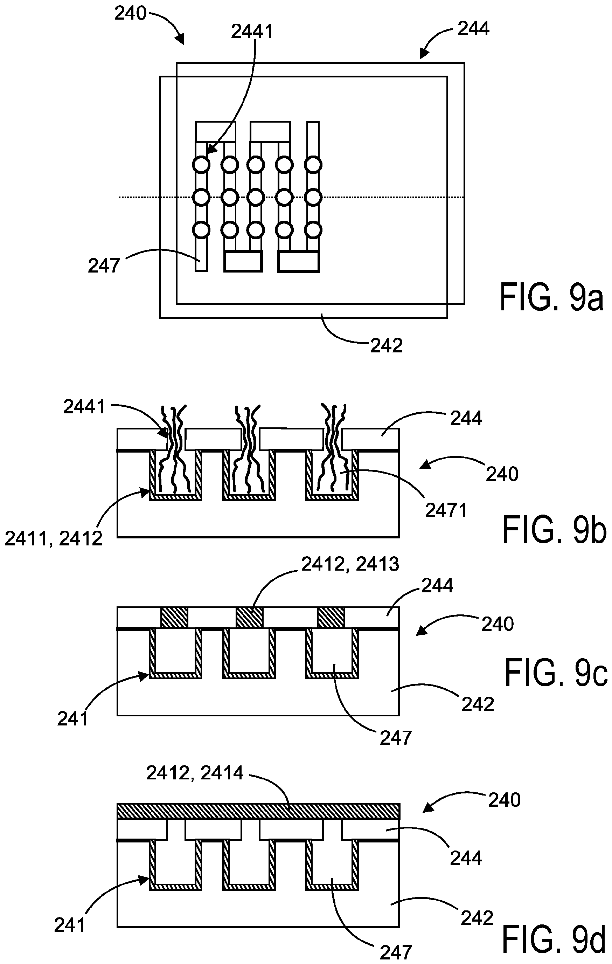

FIGs. 9a to 9d show a third embodiment of a column 240 which has a carrier part 242 with a continuous planar flow path 247. The continuous planar flow path 247 is defined by an open channel 2471 formed, in particular etched into the carrier part 242. The open channel 2471 is equipped with a stationary phase 241. The column 240 further has a cover part 244 attached to the carrier part 242 which has a plurality of filling holes 2441 arranged along the open channel 2471.

As shown in FIG. 9b, the flow path 247 is equipped with a stationary phase 241 by filling a solvent 2411 comprising an active component 2412 into the open channel 2471 through the filling holes 2441. Outgassing of the solvent 2411 is enabled via the filling holes 2441 as indicated in FIG. 9b. By outgassing the solvent 2411, the the stationary phase 241 is formed by the active component 2412 (cf. FIGs. 9c and 9d).

As shown in FIGs. 9c and 9d, the column 240 further has a sealing member 2412 sealingly closing the filling holes 2441. In FIG. 9c, the sealing member 2412 is preferably a non-outgassing sealing agent 2413 at least partly received in the filling holes 2441.

In alternative embodiments shown in FIG. 9d, the sealing member 2412 is a wafer 2414 sealingly attached to the cover part 244. The wafer may be at least partly or completely formed from silicon or glass or a foil and is sealingly attached to the cover part 244.

FIG. 10 shows a method 2000 for manufacturing a column 140 for a gas chromatograph 100 comprising providing a carrier part 142 in a first step 2100 and forming at least a part of a continuous flow path 147 in the carrier part 142, wherein the continuous flow path 147 in the carrier part is sectional defined by a plurality of channels 143 formed in the carrier part 142.

In a third step 2300 that is preferably executed following the second step 2200, a stationary phase 141 is applied to at least a part of the flow path 147, in particular to the plurality of channels 143. In a fourth step 2400, the method comprises coupling the first cover 1441 to the carrier part 142, wherein each channel 143 has a first opening 1431 and the first cover 1441 has a number of corresponding first connecting passages 1461 each coupling two adjacent first openings 1431.

In a fourth step 2400, the method 2000 comprises coupling a second cover 1442 to the carrier part 142, wherein each channel 143 has a second opening 1432 opposite the first opening 1431. The second cover 1442 has a number of corresponding second connecting passages 1462 each coupling two adjacent second openings 1432. By executing the method 2000, a column 140 having a 3-dimensional continuous flow path 147 is provided, wherein the flow path 147 is defined by the plurality of channels 143 coupled by the first and second connecting passages 1461, 1462. Preferably, the stationary phase 141 is also applied to the first and second connecting passages 1461, 1462 in the third step 2300.

FIG. 11 shows a flow chart of the second step 2200 including preferred part-steps. Forming at least a part of a continuous flow path in the carrier part comprises in a first part-step 2210 depositing or thermally growing an oxide layer onto the carrier part 142, wherein the carrier part 142 is formed by an un-patterned silicon wafer, e.g. the central wafer 240 shown in FIG. 7a. A second part-step 2220 is directed to spin coating of a resist layer onto the carrier part. In a third part-step 2230, a lithographic mask with a pattern defining a lateral dimensions of the plurality of channels to structure the oxide layer is exposed, thereby forming a hard mask partly covering the carrier part 142. In a fourth part step 2240, the carrier 142 part is etched, wherein a region of the carrier part 142 not covered with the hard mask is removed to create the plurality of channels 143.

FIG. 12 shows an alternative method 3000 for manufacturing a column 240 as shown in FIGs. 9a to 9d. The method comprises providing a non-patterned carrier part 242 in a first step 3100, wherein an open channel 1471 is etched into the carrier part242in a second step 3200. A suitable etching method is RIE etching. In a third step 3300, a cover part 244 is attached to the carrier part 242 which has a plurality of filling holes 2441 arranged along the open channel 2471. In a fourth step, 3400, a solvent 2411 comprising an active component 2412 is filled into the open channel 2471 via the filling holes 2441, followed by outgassing the solvent 2411 via the filling holes 2441 enabling formation of a stationary phase 241 by the active component 2412. In a fifth step, the filling holes 2441 are sealingly closed with a sealing member 2442, thereby forming a continuous planar flow path 247.

The distance the solvent 2411 needs to overcome is shortened due to the distributed filling holes 2441. Thus, by having filling holes 2441 distributed along the open channel 2471, outgassing of the solvent 2411 is simplified even in case of long column lengths more than 5 m and small diameters in a range of 100 µm to 500 µm or even less.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

The invention relates to a column for a gas chromatograph. The invention suggests that the column is a 3D-column comprising a carrier part with a plurality of channels, a number of first and second connecting passages each coupling two adjacent first openings or second openings, and a first and a second cover coupled to the carrier part, such that a 3-dimensional continuous flow path is provided. In the alternative, the column has a carrier part with a continuous planar flow path defined by an open channel formed into the carrier part, a cover part attached to the latter with a plurality of filling holes arranged along the open channel and a sealing member sealingly closing the filling holes. The invention also relates to a manufacturing method.

## Claims

1. Column (140, 240) for a gas chromatograph (100) for detecting volatile organic compounds,
wherein the column (140, 240) is equipped with a stationary phase (141) and configured to receive the analyte (320) and separate the volatile organic compounds in the analyte (320),
wherein the column (140) is a 3D-column comprising a carrier part (142) with a plurality of channels (143) each extending from a first opening (1431) to an opposite second opening (1432), a number of first connecting passages (1461) each coupling two adjacent first openings (1431) and a number of second connecting passages (1462) each coupling two adjacent second openings (1432), a first cover (1441) coupled to the carrier part (142) and a second cover (1442) coupled to the carrier part (142), such that a 3-dimensional continuous flow path (147) is provided which is enclosed by the carrier part (142), the first cover (1441) and the second cover (1442), or
wherein the column (240) has a carrier part with a continuous planar flow path (247) defined by an open channel (2471) formed into the carrier part (242), a cover part (244) attached to the carrier part (242) which has a plurality of filling holes (2441) arranged along the open channel (2471) and a sealing member (2472) sealingly closing the filling holes (2471).

2. Column (140) according to claim 1,
wherein the first connecting passages (1461) are at least partly defined in the first cover (1441) and the second connecting passages (1462) are at least partly defined in the second cover (1442).

3. Column (140) according to claim 1 or 2,
wherein the channels (143) are aligned parallel to each other and each has a similar length (H) extending in an axial direction (A).

4. Column (140) according to claim 1, 2 or 3,
wherein a first free opening (14311) of the first openings (1431) or second openings (1432) defines an inflow end (1471) of the 3-dimensional continuous flow path (147) and a second free opening (14312) of the of the first openings (1431) or second openings (1432) defines an outflow end (1472) of the 3-dimensional continuous flow path (147).

5. Column (140) according to any one of the preceding claims,
wherein the first cover (1441) has a first cover surface (14411) and the column (140) has a first heater (1491) being in thermal connection with the first cover surface (14411) and extending along the first cover surface (14411), and
wherein the second cover (1442) has a second cover surface (14421) and the column (140) has a second heater (1492) being in thermal connection with the second cover surface (14421) and extending along the second cover surface (14421).

6. Column (140) according to any one of the claims 3 to 5,
wherein the channels (143) are evenly distributed in the carrier part (142) and each channel (143) is spaced apart from at least a first adjacent channel (143) with a first distance (Pₓ) in a first direction (x) perpendicular to the axial direction (A) and from at least a second adjacent channel (143) with a second distance (P_{y}) in a second direction (y) perpendicular to the axial direction (A) and to the first direction (x).

7. Column (140) according to claim 6,
wherein each channel (143) has a cross section (Q) defined by a first length (Lₓ) extending in the first direction (x) and by a second length (L_{y}) extending in the second direction (y), wherein the first distance (Pₓ) is defined by the first length (Lₓ) and the second distance (P_{y}) is defined by sin(60°) of second length (L_{y}).

8. Column (140) according to any one of the preceding claims,
wherein one, more or all of the plurality of channels (143) are defined by an inner wall (145) extending in the transport direction (T) and having a surface enlarging structure (1453, 1454) extending from the inner wall (145) in a direction different from the transport direction (T).

9. Column (140) according to claim 8,
wherein surface enlarging structure (1453, 1454) has one or both of the following:
- a plurality of projections (1453, 1454) extending from the inner wall (147), or
- a plurality of cavities extending into the inner wall (145).

10. Column (140) according to claim 9,
wherein the plurality of projections (1453, 1454) or cavities comprises a first plurality of projections or cavities (1543) arranged in a first row (15431) along the inner wall (145) and a second plurality of projections (1454) or cavities arranged in a second row (14541) along the inner wall (145).

11. Column (240) according to claim 1,
wherein the sealing member (2412) comprises one, more or all of the following:
- a non-outgassing sealing agent (2413) at least partly received in the filling holes (2411);
- a wafer (2414) being silicon wafer or a glass wafer sealingly attached to the cover part (244); or
- a foil sealingly attached to the cover part (244).

12. Gas chromatograph (100) for detecting volatile organic compounds in an analyte (320), comprising:
an injector (110) for injecting the analyte (320),
a motive inlet for receiving a flow of carrier gas (310) serving as a mobile phase for carrying the analyte (320) in a transport direction (T);
a column (140, 240) equipped with a stationary phase (141, 241) and being configured to receive the analyte (320) and separate the volatile organic compounds in the analyte (320); and
a gas detector (150) configured to detect the volatile organic compounds separated by the column (140, 240);
wherein the column (140, 240) is formed in accordance with any one of the preceding claims.

13. Method (2000) for manufacturing a column for a gas chromatograph (100) comprising the steps:
- providing (2100) a carrier part (142), a first cover (1441) and a second cover (1442),
- forming (2200) at least a part of a continuous flow path (147) in the carrier part (142), wherein the continuous flow path (147) in the carrier part (142) is sectional defined by a plurality of channels (143) formed in the carrier part (142),
- applying (2300) a stationary phase (141, 241) to at least a part of the flow path (147),
- coupling (2400) a first cover (1441) to the carrier part (142), wherein each channel (143) has a first opening (1431) and the first cover (1441) has a number of corresponding first connecting passages (1461) each coupling two adjacent first openings (1431), and
- coupling (2500) a second cover (1442) to the carrier part (142), wherein each channel (143) has a second opening (1432) opposite the first opening (1431) and the second cover (1442) has a number of corresponding second connecting passages (1462) each coupling two adjacent second openings (1432), such that a 3-dimensional continuous flow path (147) is provided by the plurality of channels (143) coupled by the first and second connecting passages (1461, 1462).

14. Method according to claim 13,
wherein the stationary phase (141) is applied to the flow path (147) sectional defined by the plurality of channels (143) before the first cover (1441) and/or the second cover (1442) are coupled to the carrier part (142).

15. Method according to claim 13 or 14, forming at least a part of a continuous flow path (147) in the carrier part (comprises the steps:
- depositing or thermally growing (2210) an oxide layer onto the carrier part (142), wherein the carrier part is formed by an un-patterned silicon wafer,
- spin coating (2220) of a photoresist layer onto the carrier part,
- exposing (2230) the coated carrier to a pattern of intense light defining a lateral dimensions of the plurality of channels (143) by photolithography to structure the oxide layer thereby forming a hard mask partly covering the carrier part (142),
- etching (2240) of the carrier part (142), wherein a region of the carrier part (142) not covered with the hard mask is removed to create the plurality of channels (143).

16. Method (2000) for manufacturing a column (240) for a gas chromatograph (100) comprising the steps:
- providing a non-patterned carrier part (242);
- etching an open channel (2471) into the carrier part (242);
- attaching a cover part (244) to the carrier part (242) which has a plurality of filling holes (2441) arranged along the open channel (2471);
- filling a solvent (2411) comprising an active component (2412) into the open channel (2471) via the filling holes (2441),
- outgassing the solvent (2411) via the filling holes (2441) enabling formation of a stationary phase (241) by the active component (2412),
- sealingly closing the filling holes (2441) with a sealing member (2442), thereby forming a continuous planar flow path (247).
